Europäisches Patentamt

European Patent Office

Office européen des brevets

(19)

(11) Veröffentlichungsnummer: **0 293 470**
**B1**

(12) **EUROPÄISCHE PATENTSCHRIFT**

(45) Veröffentlichungstag der Patentschrift: **27.06.90**

(21) Anmeldenummer: **88903117.5**

(22) Anmeldetag: **12.12.87**

(86) Internationale Anmeldenummer:
**PCT/DE87/00591**

(87) Internationale Veröffentlichungsnummer:
**WO 88/04828 30.06.88 Gazette 88/14**

(51) Int. Cl.⁵: **H 01 J 29/89**

(54) **FERNSEH-BILDRÖHRE MIT VERBUNDFRONTSCHEIBE.**

(30) Priorität: **17.12.86 DE 3643088**

(43) Veröffentlichungstag der Anmeldung:
**07.12.88 Patentblatt 88/49**

(45) Bekanntmachung des Hinweises auf die
Patenterteilung:
**27.06.90 Patentblatt 90/26**

(84) Benannte Vertragsstaaten:
**AT CH DE FR GB IT LI NL SE**

(56) Entgegenhaltungen:
**GB-A-2 170 948**
**US-A-3 879 627**
**US-A-4 599 535**

(73) Patentinhaber: **FLABEG GMBH**
**Siemensstrasse 3**
**D-8510 Fürth 2 (DE)**

(72) Erfinder: **REIN, Wilhelm**
**Bernbacher Strasse 45**
**D-8510 Fürth (DE)**

(74) Vertreter: **Tergau, Enno et al**
**Hefnersplatz 3 Postfach 11 93 47**
**D-8500 Nürnberg 11 (DE)**

Courier Press, Leamington Spa, England.

EP 0 293 470 B1

**Beschreibung**

Die Erfindung betrifft eine Fernseh-Bildröhre mit Verbundfrontscheibe mit den im Oberbegriff des Anspruches 1 angegebenen Merkmalen.

Bekanntermaßen ist der Bildschirm einer Fernseh-Bildröhre mehr oder weniger stark sphärischkonvex relativ zum Betrachter gewölbt. Im Zuge der Weiterentwicklung von Fernseh-Bildröhren wurden darüber hinaus asphärische sogenannte FST-(Flat Square Tube-) Röhren entwickelt, die im Zentralbereich des Bildschirmes einen sehr großen und in dessen Randbereich einen etwas reduzierten Krümmungsradius aufweisen. Beispielsweise betragen die beiden Radien etwa 1,6m und 1,4m bei einer Bildschirmdiagonalen von etwa 0,6m. Durch eine derartige Bildschirmgestaltung wird die Verzerrung des Fernsehbildes bei übermäßig spitzen Betrachtungswinkeln vermindert, jedoch wird der Bildschirm immer noch als gekrümmte Fläche wahrgenommen. Durch diese flachen Bildröhren ist die Bildschirmfläche darüber hinaus einer ebenen Rechteckfläche besser angenähert, welche aus Gründen der Bild- und Betrachtungsqualität aus spitzen Winkeln sowie des Designs als optimal angesehen wird.

Es ist weiterhin beispielsweise aus DE—AS 22 47 337 oder US—PS 38 79 627 bekannt, die Fernsehröhre mit einer Verbundfrontscheibe zu versehen. Diese besteht aus dem Röhrenboden selbst — dem Bildschirm also —, einer vor den Bildschirm mit Abstand gesetzten Vorsatzscheibe und einer formschlüssig zwischen Bildschirm und Vorsatzscheibe eingebrachten, transparenten Gießharzschicht. Durch diese Schicht werden der Bildschirm und die Vorsatzscheibe mittels Verklebung fest miteinander verbunden. Die Vorsatzscheibe hat dabei einen zur Frontfläche des Bildschirmes parallelen Verlauf. Dadurch sollen Verzerrungen und Linseneffekte durch unterschiedliche Abstände dieser beiden Bauteile vermieden werden. Statt der Gießharzschicht kann auch ein vorgefertigter Kunststoff-Formkörper mit angepaßtem Brechungsindex verwendet werden, dessen Front- bzw. Rückfläche vollflächig mit der Vorsatzscheibe bzw. dem Bildschirm verbunden wird.

Die Verbundfrontscheibe hat verschiedene Aufgaben. Sie soll zum einen eine Beschädigung der Bildröhre verhindern bzw. falls eine Implosion der Röhre stattfindet, die Betrachter vor Splittern und anderen herumfliegenden Teilen schützen. Zum anderen kann durch eine spezielle Ausgestaltung der Verbundfrontscheibe das Fernsehbild verbessert werden. Hier ist insbesondere die Unterdrückung von Reflexionen und Doppelbildern durch Mehrfachspiegelungen zu nennen. Grundsätzlich sind folgende, das Fernsehbild beeinträchtigende Störeffekte möglich:

a) Ein- und Mehrfachreflexionen an den Vorder- und Rückflächen von Vorsatzscheibe, Bildschirm und an dessen Fluoreszenzschicht.

b) Doppelbilder durch Mehrfachreflexionen und -brechungen an den genannten Flächen.

c) Verzerrungen durch sehr spitze Betrachtungswinkel insbesondere im Randbereich des Bildschirms.

Bildröhren haben nun einen typischen Reflexionsgrad von 5,5 bis 6%, der sich aus der Summe der an beiden Bildschirmflächen und an dessen Fluoreszenzschicht auftretenden Reflexe ergibt. Der Reflexionsgrad beider Flächen einer Klarglas-Vorsatzscheibe liegt etwa bei 8%.

Der unter Berücksichtigung der Glasabsorption (Transmissionsgrad von Klarglas ca. 90%) resultierende Gesamtreflexionsgrad von etwa 12% läßt sich durch verschiedene Maßnahmen reduzieren. Durch Entspiegeln beider Grenzflächen der Vorsatzscheibe ist typisch ein Reflexionsgrad von 1% zu erreichen. Durch eine Reduzierung der Transmission der Vorsatzscheibe werden darüber hinaus die nicht von deren Frontfläche reflektierten Lichtstrahlen einmal beim Durchlauf zu den innenliegenden Reflexionsflächen der Vorsatzscheibe bzw. des Bildschirms gedämpft. Der reflektierte Lichtanteil davon wird nochmals beim Hindurchtreten durch die in ihrem Transmissionsgrad auf beispielsweise 60 % reduzierte Vorsatzscheibe in ihrer Intensität geschwächt. Dadurch kann der Gesamtreflexionsgrad R des kompletten, aus insgesamt vier Reflexionsflächen bestehenden Systems entsprechend der Berechnung $R = 1\% + (0{,}60^2 \times 5{,}5)\%$ auf typisch 3% gedrückt werden. Die Transmissionsreduzierung kann durch Verwendung von Grauglas (Transmissionsgrad ca. 60%) oder gar Maschinengrauglas (Transmissionsgrad ca. 30%) erreicht werden.

Durch eine Entspiegelung aller Reflexionsflächen ließe sich zwar der Reflexionsgrad noch erheblich vermindern, doch stellt dies eine sehr aufwendige und kostenintensive Maßnahme dar.

Die unter c) angegebenen Verzerrungseffekte sind durch eine möglichst geringe Wölbung der Bildschirmröhre und der Vorsatzscheibe verminderbar.

In DE—AS 22 47 337 wurde bereits auch vorgeschlagen, die Gießharzschicht zwischen dem Bildschirm und der Vorsatzscheibe aus einem Material mit vermindertem Transmissionsgrad herzustellen. Ganz allgemein sind der Verminderung des Transmissionsgrades jedoch Grenzen gesetzt, da darunter auch die Bildqualität an sich leidet. Das in der Fluoreszenzschicht der Fernsehröhre erzeugte Licht muß nämlich ebenfalls durch die lichtdämpfende Schicht hindurch.

Weitere Druckschriften zum Stande der Technik sind GB—21 70 948, US—3952 152, US—45 99 535, JP—59—105191, EP—A—0119048 und EP—A—0018667.

GB—21 70 948 zeigt eine Kathodenstrahlröhre mit einem sphärisch gewölbten Bildschirm und einer mittels einer Gießharzschicht damit verklebten, ebenfalls sphärisch gewölbten, reflektionsarmen Vorsatzscheibe. Der Brechungsindex der Gießharzschicht entspricht etwa dem des Bildschirmes und der Vorsatzscheibe, wodurch ein sogenannter "optischer Verbund" zwischen diesen drei Bauteilen geschaffen wird. Die Verbundfrontscheibe wirkt damit im wesentlichen als optisch einstückiges Medium, wodurch Reflexionen an den Grenzflächen zwischen der Gießharzschicht und der Vorsatzscheibe bzw. dem Bildschirm nahezu vollständig unterdrückt werden. Durch die vom Zentrum der Verbundfrontscheibe zu deren Rand gleichbleibende Dicke der Gießharzschicht sind Verzerrungen der durch die Verbundfrontscheibe hindurchtretenden Lichtstrahlen und Linseneffekte nicht zu erwarten. Da die Frontfläche der Vorsatzscheibe jedoch die Krümmung des Bildschirmes nachvollzieht, ist eine Verbesserung der Betrachtungsqualität bei sehr spitzen Betrachtungswinkeln nicht erzielbar.

Es ist darauf hinzuweisen, daß ähnliche Kathodenstrahlröhren bekannt sind, bei denen die Gießharzschicht durch eine dünne, beidseitig selbstklebende Folie ersetzt ist, deren Brechungsindex wiederum dem der Vorsatzscheibe bzw. des Bildschirmes angepaßt ist. Um einen einwandfreien optischen Verbund zu erzielen, muß die Verklebung zwischen den drei genannten Bauteilen vollflächig sein. Dies ist nur dann realisierbar, wenn der Krümmungsradius von Bildschirm und Vorsatzscheibe innerhalb sehr enger Fertigungstoleranzen gleich ist. Entsprechend ist die Herstellung dieser Bauteile äußerst aufwendig.

Der Vollständigkeit halber wird auf US—39 52 152 hingewiesen, die eine Kathodenstrahlröhre zeigt, bei der eine Vorsatzscheibe als Implosionsschutz verwendet wird, jedoch ist hier kein optischer Verbund in Form einer Gießharzschicht zwischen dem Bildschirm und der Vorsatzscheibe vorgesehen. Letztere weist zumindest im Randbereich einen größeren Krümmungsradius als der Bildschirm auf, wodurch zwischen diesen beiden Bauteilen am Rand ein Abstandsspalt geschaffen wird, der notwendig ist, um die verschiedenen Befestigungsmittel für die Vorsatzscheibe und ein zwischen dieser und dem Bildschirm eingesetztes Abschirmnetz unterzubringen.

Bei der Kathodenstrahlröhre nach US—45 99 535 wird eine zweiteilige, ebene Vorsatzscheibe verwendet, die aus einem Implosionsschild und einer Filterplatte zusammengesetzt ist. Bei der Gießharzschicht zwischen der Vorsatzscheibe und dem Bildschirm ergeben sich wegen der ebenen Form der Vorsatzscheibe enorme Schichtdickenunterschiede zwischen dem Zentrum und dem Randbereich. Die Verwendung einer derartigen Anordnung bei einer Fernsehbildröhre mit großflächigem Bildschirm ist nicht möglich, da sich durch den großen Schichtdickenunterschied störende Verzerrungs- und Linseneffekte insbesondere im Randbereich ergeben, was zu einer indiskutablen Bildqualität führt. Wie aus Fig. 2 der vorgenannten Druckschrift deutlich wird, handelt es sich bei der beschriebenen Röhre um eine solche mit rundem Bildschirm, wie er beispielsweise bei Oszilloskopen, Radarschirmen o.dgl. eingesetzt wird. Hierbei spielt die Bildqualität im Randbereich bei weitem nicht die Rolle wie bei großflächigen Fernsehbildröhren. Analoges gilt für die Kathodenstrahlröhren nach EP—A—0119048 und EP—A—0018667, da hier ebenfalls ebene Vorsatzscheiben verwendet werden.

JP—59—105191 zeigt eine Kathodenstrahlröhre, die einen zylindrischen oder sphärischen Bildschirm aufweist. Derartige Bildschirme werden bei rechteckigen Kathodenstrahlröhren — also beispielsweise bei Fernseh-Bildröhren — verwendet. Der genannten Druckschrift sind keine Informationen entnehmbar, wonach bei der Kathodenstrahlröhre eine Verbundfrontscheibe bestehend aus Bildschirm und Vorsatzscheibe verwendet wird. Vielmehr beschäftigt sich diese Vorveröffentlichung mit anders gearteten Maßnahmen zur Verbesserung des Implosionsschutzes. Ein sogenanntes Klemmband wird auf der Verbindungsnaht zwischen dem Randbereich des Bildschirmes und des verbleibenden, trichterförmigen Abschnittes der Kathodenstrahlröhre unter Vorspannung angebracht. Dadurch wird wiederum der zylindrische oder sphärische Bildschirm unter eine mechanische Spannung gesetzt, die dem auf die evakuierte Bildröhre wirkenden atmosphärischen Druck entgegengesetzt ist. Durch eine spezielle Geometrie des Klemmbandes wird bei gleichbleibender Dicke des Zentralbereichs des Bildschirmes bei reduzierter Spannkraft des Klemmbandes ein verbesserter Implosionsschutz erzielt.

Zusammenfassend sind aus dem Stand der Technik Kathodenstrahlröhren mit Verbundfrontscheiben bekannt, bei denen die Vorsatzscheibe mit dem Bildschirm durch eine Gießharzschicht miteinander verklebt ist. Erfahrungsgemäß sind sphärische Bildschirme in Kombination mit einer ebenen Vorsatzscheibe nur für relativ kleinflächige Computer-Monitore, für Oszilloskop-Schirme o.dgl. realisierbar, da hier die Schichtdickenunterschiede zwischen Zentrum und Randbereich nicht zu groß werden. Darüber hinaus spielt bei den vorgenannten Geräten die Bildqualität im Randbereich nicht die Rolle wie bei großflächigen Fernseh-Bildröhren. Entsprechend können Verluste in der Bildqualität durch die Schichtdickenunterschiede vom Zentrum zum Randbereich des Bildschirmes in Kauf genommen werden, zumal — im Gegensatz zu Fernsehbildröhren — dieser Randbereich in der Regel nicht vollflächig für die Bildwiedergabe genutzt wird.

Bei Fernseh-Bildröhren werden mittels einer Gießharzschicht verklebte Vorsatzscheiben verwendet, die die Krümmung des Bildschirmes nachvollziehen, damit die Gießharzschicht eine über die Breite und Höhe des Bildschirmes konstante Dicke aufweist. Damit werden zwar Linseneffekte vermieden, da jedoch der Bildschirm der evakuierten Bildröhre aus Stabilitätsgründen eine gewisse sphärische Wölbung nicht unterschreiten darf, weist auch die Frontfläche der Vorsatzscheibe diesen Krümmungsverlauf auf. Entsprechend sind derartige Fernseh-Bildröhren mit einem großflächigen Bildschirm verbesserungsbedürftig, da durch die gekrümmte Frontfläche der Vorsatzscheibe Verzerrungen bei spitzen Betrachtungswinkeln zu verzeichnen sind und eine befriedigende Annäherung an die als optimal erachtete ebene, rechteckige Frontfläche noch nicht erzielt ist.

Davon ausgehend liegt der Erfindung die Aufgabe zugrunde, eine Fernseh-Bildröhre mit Verbundfrontscheibe zu schaffen, die eine verbesserte Bild- und Betrachtungsqualität aufweist, dabei aber einfacher herstellbar und vom ästhetischen Gesamteindruck äußerst befriedigend ist.

Die Lösung dieser Aufgabe ist in den kennzeichnenden Merkmalen des Anspruches 1 angegeben.

Demnach ist die Vorsatzscheibe lediglich in einer einzigen Richtung — nämlich um die Vertikalachse — zylindrisch gewölbt. Ihr Krümmungsradius ist wesentlich größer als der Krümmungsradius des Bildschirmes. Die Kombination dieser Merkmale mit denen des Oberbegriffes bedingt folgende Vorteile des Erfindungsgegenstandes:

Es wird eine stark verbesserte Annäherung an die für eine gute Betrachtungsqualität auch aus spitzen Winkeln als optimal erachtete ebene Rechteckform der Frontfläche der Vorsatzscheibe erzielt, die wegen der erwarteten Linsen- und Verzerrungseffekte bedingt durch die großen Schichtdickenunterschiede zwischen Zentrum und Randbereich bei großflächigen Fernseh-Bildröhren nicht realisiert wird. Durch den erheblich vergrößerten Radius der Krümmung um die Vertikalachse und die in Vertikalrichtung gänzlich fehlende Krümmung entsteht bei einer Betrachtung der erfindungsgemäßen Fernseh-Bildröhre der Eindruck, es handele sich um eine vollkommen plane Frontfläche. Entsprechend ist auch bei spitzen Betrachtungswinkeln ein befriedigender Sehkomfort erzielbar.

Vom Zentrum zum Randbereich werden bewußt Dickenunterschiede in der Gießharzschicht in Kauf genommen. Diese werden jedoch durch die Wölbung in Richtung des größeren Breitenmaßes des Bildschirmes begrenzt. Überraschenderweise ist es trotz der Schichtdickenunterschiede jedoch so, daß bei fernsehtechnischen Labormessungen meßbare Verzerrungs- und Linseneffekte nicht feststellbar sind. Die Bildqualität entspricht also vollkommen dem derzeit aktuellen Spitzenstandard.

Die lediglich um eine Achse gekrümmte Vorsatzscheibe ist in der Regel einfacher herstellbar, als eine um zwei Achsen gewölbte sphärische Vorsatzscheibe. Entsprechend vermindert ist der Herstellungsaufwand.

Die zylindrisch gewölbte Vorsatzscheibe weist im Vergleich zu einer sphärisch gewölbten nur eine unwesentlich geringere Biegefestigkeit auf, die jedoch wesentlich höher ist als die ebener Vorsatzscheiben. Ein wirksamer Implosionsschutz ist also nach wie vor gegeben.

Da die Vorsatzscheibe in horizontaler Richtung nur schwach sowie in vertikaler Richtung überhaupt nicht gewölbt ist, werden von externen Lichtquellen herrührende Lichtreflexe nur aus einem wesentlich geringeren Raumwinkel zum Betrachter der Frontfläche zurückgeworfen. Der Reflexionsgrad wird also zusätzlich zur Reflexunterdrückung mittels des optischen Verbundes durch einen generell geringeren Reflexumfang reduziert.

Im Gegensatz zu frei in Luft vor dem Bildschirm befestigten Vorsatzscheiben wird infolge des Gießharzverbundes das Fernsehbild nicht mehr wie durch ein vorgesetztes Schaufensterglas wahrgenommen, sondern das Bild erscheint als nahezu ebene Fläche an der vorderen Grenzfläche (Frontfläche) der durch die Merkmale des Anspruches 1 charakterisierten Konstruktion.

Zusammenfassend stellt die erfindungsgemäße Fernseh-Bildröhre einen äußerst geglückten Kompromiß zwischen Bild- und Betrachtungsqualität, einfacher Herstellbarkeit, wirksamen Implosionsschutz und ästhetisch ansprechenden Gesamteindruck dar.

Die Ansprüche 2 und 3 kennzeichnen vorteilhafte Verhältnisse der Krümmungsradien von Bildschirm und Vorsatzscheibe zueinander.

Zur weiteren Reflexminderung genügt es laut Anspruch 4, lediglich die Frontfläche der Vorsatzscheibe durch Aufbringen einer ein- oder mehrschichtigen Interferenz-Beschichtung zu entspiegeln. Dabei kann es sich sowohl um ein aufwendiges mehrschichtiges Interferenzsystem handeln als auch um eine einfache einschichtige $\lambda/4$-Schicht, die jedoch wegen der an sich bereits sehr niedrigen Reflexionsgrade der durch die Merkmale des Anspruches 1 charakterisierten Konstruktion bei weitem ausreicht, um eine genügende Verbesserung der Bildqualität zu erzielen.

Anspruch 5 lehrt eine alternative Möglichkeit, die Frontfläche auf äußerst kostengünstige und einfache Weise zu entspiegeln. Die Mattierung kann z.B. auf bekannte Weise durch eine Ätzung der Frontfläche erzielt werden. Ein Glanzwert von etwa 80 hat sich als günstig erwiesen. Die mattierte Frontfläche kann zusätzlich auch mit einer ein- oder mehrschichtigen Interferenzbeschichtung entspiegelt werden.

Durch die Beschichtung auf der Rückseite der Vorsatzscheibe (Ansprüche 6 und 7) können verschiedene Vorteile erzielt werden. Zuvorderst sollen elektrostatische Aufladungen abgeleitet werden, wodurch die Verschmutzungsneigung der Frontfläche drastisch herabgesetzt wird. Dazu genügt ein typischer Flächenwiderstand der Beschichtung im Bereich von etwa 15 kOhm. Eine aufwendige Beschichtung mit einem Flächenwiderstand im Bereich von etwa 30—200 Ohm, wie sie beispielsweise bei der Kathodenstrahlröhre nach EP—A—0119078 zur elektromagnetischen Abschirmung benötigt wird, ist demgegenüber nicht vorgesehen. Vielmehr soll durch die Beschichtung ein Statik-Schock vermieden werden, der beim Ein- und Ausschalten von Fernsehgeräten auftreten kann. Weiterhin kann durch die Beschichtung der Transmissionsgrad der Verbundfrontscheibe im wesentlichen unabhängig von deren Dicke eingestellt werden. Dadurch wird eine gleichmäßige Helligkeitsverteilung von der Mitte bis zum Randbereich der Frontscheibe erzielt. Letztendes ist die Beschichtung optisch so eingestellt, daß praktisch keine Störungen an

dem optischen Übergang von der Beschichtung zum Gießharz auftreten. Dies bedeutet, daß keine störenden Doppelbilder wahrgenommen werden. Es ist darauf hinzuweisen, daß die rückseitige Beschichtung durch Magnetron-Kathoden-Zerstäubung aufgebracht werden kann. Diese ist korrosionsbeständig, abriebfest und äußerst kostengünstig. Sowohl in Durchsicht als auch in Aufsicht absorbiert die leitfähige Beschichtung äußerst farbneutral, d.h. es treten bei Farbfernsehgeräten keinerlei Farbverfälschungen auf.

Die Erfindung wird in einem Ausführungsbeispiel anhand der beiliegenden Zeichnung näher erläutert.

Fig. 1 zeigt einen Horizontalschnitt durch die Verbundfrontscheibe der Fernsehröhre und

Fig. 2 einen Detail-Horizontalschnitt in vergrößertem Maßstab.

Das tragende Teil der Verbundfrontscheibe ist der flache, sphärisch konvex gewölbte Bildschirm 1 des Fernsehgerätes. Bei der Bildröhre handelt es sich um eine sogenannte FST-(Flat Square Tube-)Röhre. Durch randseitig umlaufende oder nur in den Eckbereichen angeordnete Abstandshalter 2 ist die Vorsatzscheibe 3 mit Abstand zur Frontseite 4 des Bildschirmes 1 gehalten. Der Raum zwischen Vorsatzscheibe 3 und Bildschirm 1 ist durch eine Gießharzschicht 5 vollständig ausgefüllt, die die beiden genannten Bauteile miteinander verklebt. Die Gießharzschicht 5 ist transparent, farbneutral sowie absorptionsarm und weist einen Brechungsindex auf, der etwa dem des Bildschirmes 1 und der Vorsatzscheibe 3 entspricht. Repräsentative Werte für die Brechungsindices des Bildschirms und der Vorsatzscheibe bzw. der Gießharzschicht sind 1,52 bzw. 1,45—1,48. Die Grenzflächen 6 bzw. 7 zwischen der Gießharzschicht 5 und dem Bildschirm 1 bzw. der Vorsatzscheibe 3 reflektieren somit mit einem Restreflexionsgrad von 0,06% und weniger. Als verbleibende Reflexionsflächen wirken im wesentlichen also nur noch die Rückseite 8 des Bildschirmes 1 mit ihrer Fluoreszenzschicht 9 sowie die Frontfläche 10 der Vorsatzscheibe 3.

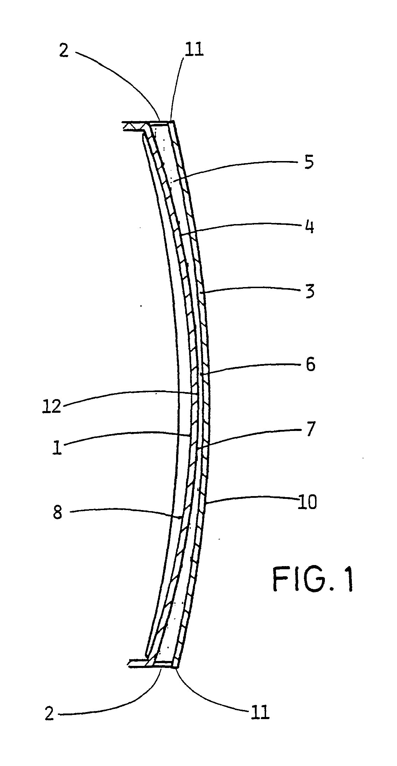

Wie in Fig. 1 dargestellt, weist der sphärisch gewölbte Bildschirm 1 einen geringeren Krümmungsradius auf als die um die Vertikalachse zylindrisch gewölbte Vorsatzscheibe 3. Bei einer Bildschirmdiagonalen von 70cm Länge beträgt der Krümmungsradius des Bildschirms beispielsweise 160 bis 170cm, während der der Vorsatzscheibe etwa bei 360cm liegt. Das Radienverhältnis liegt also etwa bei 1:2,1. Die horizontalen, langen Seitenkanten an der Ober- und Unterseite der Vorsatzscheibe 3 sind leicht gekrümmt, während die vertikal stehenden, kurzen Seitenkanten 11 gerade ausgebildet sind.

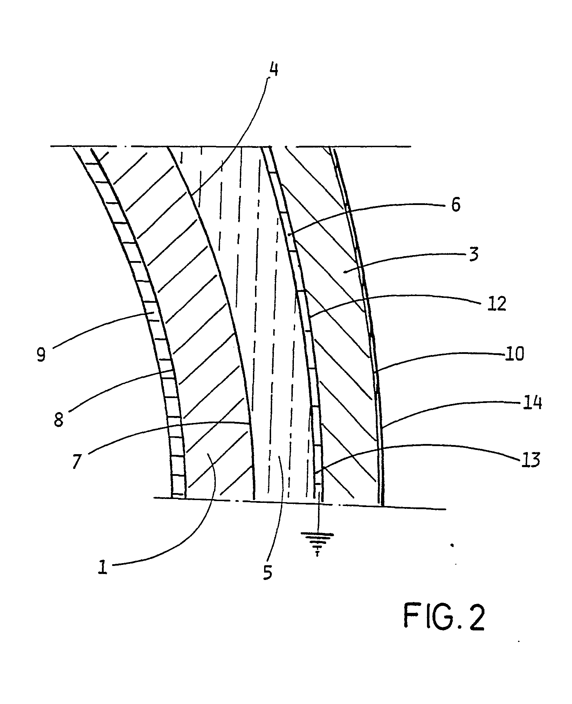

Die Frontfläche 10 der Vorsatzscheibe 3 kann gemäß Fig. 2 zusätzlich mit einer mehrschichtigen λ/4-Beschichtung 14 versehen sein, die z.B. im Sputter-Verfahren herstellbar ist und eine einfache und kostengünstige Entspiegelungsmaßnahme darstellt. Mit der gezeigten Verbundfrontscheibe mit der einseitigen, einfachen Entspiegelung und Brechungsindex-angepaßter Gießharzschicht 5 ist ein Gesamtreflexionsgrad von etwa 1,9% erreichbar.

Durch hochwertigere Entspiegelungen — beispielsweise mit mehrschichtigen Aufdampfsystemen (u.a. mit außenliegender MgF$_2$-Schicht) läßt sich dieser Gesamtreflexionsgrad auf ca. 1,6% drücken.

In Fig. 2 ist zusätzlich eine Beschichtung der Rückseite 12 der Vorsatzscheibe 3 gezeigt. Dabei handelt es sich um eine leitfähige, extern geerdete Absorptionsbeschichtung 13, die aus Chrom, einer Chromlegierung oder einem Silizid einschichtig aufgebaut ist. Die Dicke dieser Absorptionsbeschichtung 13 ist so eingestellt, daß der Transmissionsgrad um ein Drittel reduziert ist. Der Flächenwiderstand der Absorptionsbeschichtung beträgt etwa 15 kOhm.

**Patentansprüche**

1. Fernseh-Bildröhre mit Verbundfrontscheibe, die zusammengesetzt ist aus

einem vorzugsweise großflächigen, flach sphärisch oder asphärisch relativ zum Betrachter konvex gewölbten Bildschirm (1),

einer konvex gewölbten, beabstandet vor den Bildschirm (1) gesetzten Vorsatzscheibe (3) vorzugsweise aus Klar-, Grau- oder Maschinengrauglas und einer zwischen Bildschirm (1) und Vorsatzscheibe (3) zu deren gegenseitigen Verklebung eingebrachten, transparenten Gießharzschicht (5) deren Brechungsindex etwa dem der Vorsatzscheibe (3) bzw. des Bildschirms (1) entspricht, dadurch gekennzeichnet,

daß die Vorsatzscheibe (3) lediglich um die Vertikalachse zylindrisch gewölbt und ihr Krümmungsradius wesentlich größer als der Krümmungsradius des Bildschirmes (1) ist.

2. Fernseh-Bildröhre nach Anspruch 1, dadurch gekennzeichnet, daß das Verhältnis der Krümmungsradien von Bildschirm (1) und Vorsatzscheibe (3) zwischen 1:1,2 und 1:3,5 liegt.

3. Fernseh-Bildröhre nach Anspruch 2, dadurch gekennzeichnet, daß das Verhältnis der Krümmungsradien von Bildschirm (1) und Vorsatzscheibe (3) zwischen 1:1,8 und 1:2,3 liegt.

4. Fernseh-Bildröhre nach einem der vorgenannten Ansprüche, dadurch gekennzeichnet, daß die Frontfläche (10) der Vorsatzscheibe (3) durch Aufbringen einer ein- oder mehrschichtigen Interferenzbeschichtung (λ/4-Beschichtung 14) entspiegelt ist.

5. Fernseh-Bildröhre nach einem der Ansprüche 1 bis 4, dadurch gekennzeichnet, daß die Frontfläche (10) der Vorsatzscheibe (3) mattiert ist.

6. Fernseh-Bildröhre nach einem der vorgenannten Ansprüche, dadurch gekennzeichnet, daß die Rückseite (12) der Vorsatzscheibe (3) mit einer elektrisch leitfähigen, antistatisch wirkenden und geerdeten Beschichtung (Absorptionsbeschichtung 13) versehen ist.

7. Fernseh-Bildröhre nach Anspruch 6, dadurch gekennzeichnet, daß die rückseitige Beschichtung (Absorptionsbeschichtung 13) der Vorsatzscheibe (3) aus Metallen, Metall-Legierungen oder Metall-

Verbindungen, wie z.B. Chrom, Edelstahl oder Siliziden besteht und eine derartige Dicke aufweist, daß der Licht-Transmissionsgrad im Vergleich zur unbeschichteten Scheibe um etwa ein Drittel reduziert ist.

**Revendications**

1. Tube image de télévision comportant à l'avant une dalle composite qui est constituée de

un écran (1), de préférence de grande surface, à faible bombement sphérique ou asphérique, dirigeant sa convexité vers l'observateur,

une plaque additionnelle (3) placée à distance devant l'écran (1), à bombement convexe, de préférence en verre clair, verre gris ou verre gris laminé et

une couche transparente de résine de coulée (5), disposée entre l'écran (1) et la plaque additionnelle (3) pour les coller ensemble, dont l'indice de réfraction correspond à peu près à celui de la plaque additionnelle (3) ou de l'écran (1), caractérisé en ce que

la plaque additionnelle (3) est seulement pourvue d'un bombement cylindrique par rapport à l'axe vertical et son rayon de courbure est nettement plus grand que le rayon de courbure de l'écran (1).

2. Tube selon la revendication 1, caractérisé en ce que le rapport des rayons de courbure de l'écran (1) et de la plaque additionnelle (3) est compris entre 1:1,2 et 1:3,5.

3. Tube selon la revendication 2, caractérisé en ce que le rapport des rayons de courbure de l'écran (1) et de la plaque additionnelle (3) est compris entre 1:1,8 et 1:2,3.

4. Tube selon une des revendications précédentes, caractérisé en ce que la face frontale (10) de la plaque additionnelle (3) est soumis à un traitement antireflet par application d'un revêtement d'interférence (revêtement λ/4 14) à une ou plusieurs couches.

5. Tube selon une des revendications 1 à 4, caractérisé en ce que la face frontale (10) de la plaque additionnelle (3) est rendue mate.

6. Tube selon un des revendications précédentes, caractérisé en ce que le côté arrière (12) de la plaque additionnelle (3) est pourvu d'un revêtement (revêtement absorbant 13) qui est conducteur électrique, a un effet antistatique et est relié à la terre.

7. Tube selon la revendication 6, caractérisé en ce que le revêtement (revêtement absorbant 13) du côté arrière de la plaque additionnelle (3) est formé de métaux, alliages métalliques ou composés métalliques, comme par exemple de chrome, acier fin ou siliciures et possède une épaisseur telle que le coefficient de transmission de la lumière est réduit d'un tiers environ comparativement à la plaque non revêtue.

**Claims**

1. A television image tube with a composite front glass which is composed of

a preferably large, flat spherical or aspherical screen (1) with a convex curvature in relation to the viewer,

a supplementary front convex glass (3) located at a distance in front of the screen (1), preferably made of clear glass, grey glass or machine grey glass and

a transparent moulded resin coat (5) applied between the screen (1) and the front glass (3) to ensure their mutual adhesion, the refraction index of which coat of molded resin corresponds approximately to that of the front glass (3) and of the screen (1),

characterised in that the front glass (3) has only a cylindrical curvature around the vertical axis, and that its radius of curvature is considerably greater than the radius of curvature of the screen (1).

2. A television image tube according to claim 1, characterised in that the ratio of the radii of curvature of the screen (1) and of the front glass (3) lies between 1:1.2 and 1:3.5.

3. A television image tube according to claim 2, characterised in that the ratio of the radii of curvature of the screen (1) and of the front glass (3) lies between 1:1.8 and 1:2.3.

4. A television image tube according to one of the preceding claims, characterised in that the front surface (10) of the front glass (3) is given an antireflection finish by the application of a single layer or multilayer interference coating (λ/4-coating 14).

5. A television image tube according to one of claims 1 to 4, characterised in that the front surface (10) of the front glass (3) is matt.

6. A television image tube according to one of the preceding claims, characterised in that the rear side (12) of the front glass (3) is provided with a coating (absorption coating 13) which is electrically conductive, has an antistatic effect and is earthed.

7. A television image tube according to claim 6, characterised in that the rear coating (absorption coating 13) of the front glass (3) consists of metals, metallic alloys or metallic compounds, as, for example, chromium, high grade steel or silicides and has such a thickness that the degree of light transmission is reduced by approximately one third as compared with an uncoated glass.

FIG. 1

FIG.2